Europäisches Patentamt

(19) European Patent Office

Office européen des brevets

(11) Numéro de publication: **0 005 382**
**B1**

(12) **FASCICULE DE BREVET EUROPEEN**

(21) Numéro de dépôt: 79400021.6

(22) Date de dépôt: **09.01.79**

(51) Int. Cl.³: **B 60 P 3/34**

(54) Caravane pliante en toile

(30) Priorité: **20.04.78 FR 7811678**

(43) Date de publication de la demande:
**14.11.79 Bulletin 79/23**

(45) Mention de la délivrance du brevet:
**07.01.81 Bulletin 81/01**

(84) Etats contractants désignés:
**BE DE GB IT NL SE**

(56) Documents cités:
**DE - A - 1 430 707**
**FR - A - 2 206 211**
**FR - A - 1 214 706**
**FR - A - 2 054 523**
**GB - A - 498 162**

(73) Titulaire: **ANDRE JAMET Société Anonyme Française Société dite:**
**1 rue Sidi Brahim**
**F - 38041 Grenoble (FR)**

(72) Inventeur: **Rivier, Paul**
**Route de Lornay**
**F - 74150 Rumilly (FR)**
**Bucari, Claude**
**5 montée de la dame**
**F - 74150 Rumilly (FR)**
**Topalian, Samuel**
**Rue du Vercors La Chatelière**
**F - 38320 Eybens (FR)**
**Baud, Alain**
**6 cours de la libération Résidence du Chateau**
**F - 38130 Echirolles (FR)**

(74) Mandataire: **Bouju, André**
**Cabinet Bouju 38 avenue de la Grande Armée**
**F - 75017 Paris (FR)**

Courier Press, Leamington Spa, England.

Caravane pliante en toile

La présente invention concerne une caravane pliante comprenant une toile de tente et une remorque destinée à contenir cette toile, cette dernière pouvant être déployée sur cette remorque après ouverture d'un couvercle articulé sur l'un des bords de la remorque.

Dans ce type de caravane pliante, la toile de tente est supportée par un arceau principal articulé sur l'un des bords longitudinaux de la remorque et par deux arceaux secondaires articulés sur des noix coulissantes montées sur les montants de l'arceau principal. La toile de tente est fixée, d'une part, au bord de la remorque opposé à celui suivant lequel est articulé le couvercle et, d'autre part, au bord du couvercle opposé à l'articulation précitée.

Pour mettre cette caravane en position de service, on rabat le couvercle vers le sol ce qui entraîne automatiquement le dépliage de la toile qui est fixée à ce couvercle. Pour tendre cette toile, on fait coulisser les arceaux secondaires sur les montants de l'arceau principal. Cette opération est laborieuse et nécessite le plus souvent l'emploi de câbles actionnés par un treuil.

Dans une réalisation connue, le coulissement des arceaux secondaires vers l'extrémité libre de l'arceau principal est obtenu de façon automatique lors de l'ouverture du couvercle grâce à l'utilisation de câbles de tension reliant notamment les arceaux secondaires à l'arceau principal (voir notamment la demande de brevet (FR-A-2 206 211).

L'utilisation de tels câbles soulève, toutefois, de nombreuses difficultés. En effet, lors du dépliage de la toile, de tels câbles risquent de s'accrocher les uns aux autres ou à des parties saillantes des arceaux ou de la remorque, ce qui peut entraîner des déchirures de la toile ou une détérioration des arceaux dans le cas où l'utilisateur pousserait trop fort sur le couvercle.

Le but de la présénte invention est de remédier aux inconvénients des caravanes connues précitées, en permettant le déployage et la tension automatiques de la toile par simple ouverture du couvercle, et ce, sans utiliser aucun câble de tension de la toile.

La caravane pliante visée par l'invention comprend une toile de tente et une remorque destinée à contenir cette toile, cette dernière pouvant être déployée sur ladite remorque après ouverture d'un couvercle articulé sur l'un des bords de la remorque, la toile de tente étant fixée sur un arceau principal articulé au bord de la remorque et sur deux arceaux secondaires articulés de façon coulissante sur les montants de l'arceau principal, et des moyens de liaison étant prévus entre ce dernier et les arceaux secondaires.

Suivant l'invention, cette caravane est caractérisée en ce que chaque arceau secondaire est relié à l'arceau principal par au moins une tige, l'une des extrémités de cette tige étant articulée à un des montants de l'arceau secondaire et l'autre extrémité étant articulée sensiblement à l'extrémité libre de l'arceau principal.

Lors du déploiement de la toile de tente, qui est réalisé par l'ouverture du couvercle, l'arceau principal est amené en position sensiblement verticale, et les arceaux secondaires s'écartent en éventail de l'arceau principal. Grâce aux tiges articulées, les arceaux secondaires se trouvent suspendus à l'arceau principal, de sorte que les arceaux secondaires coulissent vers le sommet de l'arceau principal, en même temps qu'ils s'écartent de cet arceau principal. La toile de tente se trouve ainsi automatiquement tendue, simplement sous l'effet de la traction exercée par le couvercle sur la toile, lors de son rabattement vers le sol.

Les tiges précitées ne risquent pas de s'accrocher à des parties saillantes, comme les câbles utilisés dans les réalisations connues. On évite ainsi les risques de détérioration de la toile et des arceaux.

Selon une version avantageuse de l'invention, l'armature de la caravane comprend deux paires de tiges, une des extrémité de chaque tige de chaque paire étant articulées sensiblement à l'extrémité libre d'un des montants de l'arceau principal, l'autre extrémité de chaque tige étant articulé ou montant correspondant des arceaux secondaires articulés de façon coulissante sur le même montant de l'arceau principal.

Grâce à cette disposition, les tiges précitées permettent d'accomplir efficacement la fonction expliquée précédemment. En outre, du fait de cette disposition, les tiges consolident avantageusement les parois latérales de la caravane adjacentes aux montants de arceaux.

Selon une version préférée de l'invention, la somme de la longueur d'une tige et de la distance comprise entre l'articulation du montant de l'arceau secondaire à l'arceau principal et l'articulation de cette tige à ce montant de l'arceau secondaire est sensiblement égale à la distance comprise entre l'articulation des tiges à l'arceau principal et l'articulation des montants des arceaux secondaires lorsque cette dernière est située en fin de course à proximité de la remorque.

Ainsi, lorsque les arceaux secondaires sont repliés vers l'arceau principal et que l'ensemble des arceaux est rabattu dans remorque, les tiges s'étendent de façon sensiblement parallèle aux montants des différents arceaux, de sorte que cet ensemble présente, lors du pliage de la tente, un encombrement très réduit.

D'autres particularités et avantages de l'invention apparaîtront encore dans la description qui va suivre.

Aux dessins annexés donnés à titre d'exemples non limitatifs:

— la Figure 1 est une vue en perspective de la caravane conforme à l'invention en position de service,

— la Figure 2 est une vue de l'avant de la caravane, la toile étant en cours de repliage,

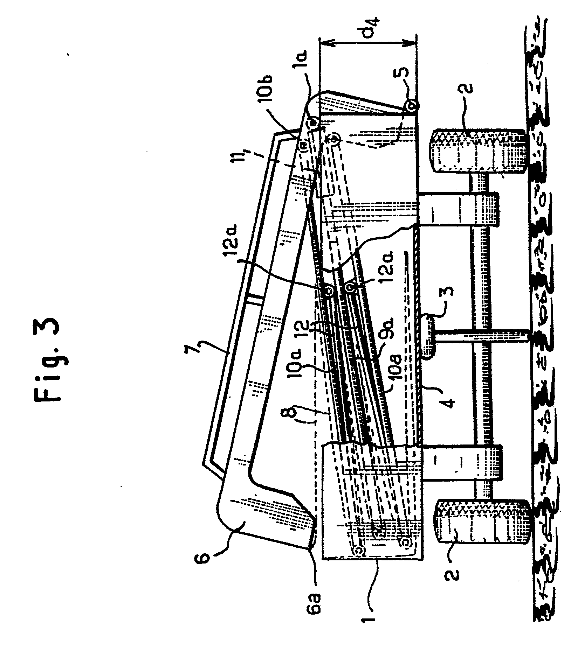

— la Figure 3 est une vue analogue à celle de la Figure 2, la toile étant pratiquement complètement repliée dans la remorque,

— la Figure 4 est une vue en perspective de la caravane conforme à l'invention, montrant l'aménagement intérieur de la caravane pour le jour, la toile et les arceaux ayant été enlevés,

— la Figure 5 est une vue analogue à celle de la Figure 4, montrant l'aménagement intérieur pour la nuit.

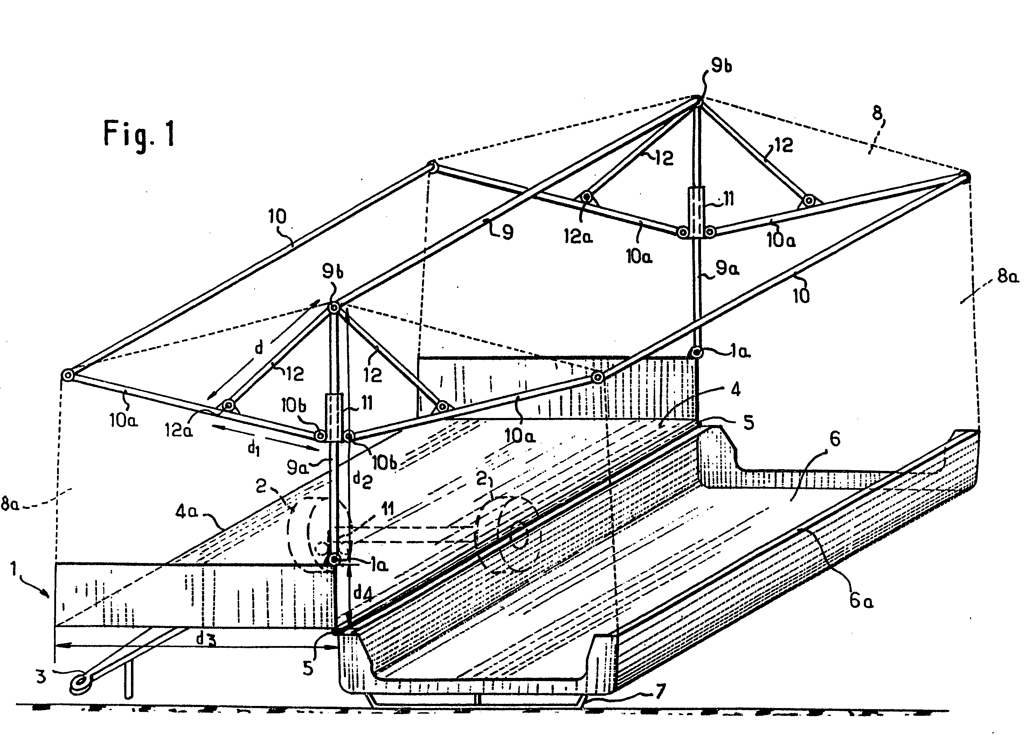

En référence à la Figure 1, la caravane conforme à l'invention comprend une remorque 1 montée sur deux roues 2 et munie d'une flèche 3 pour atteler cette remorque. Cette remorque 1 comporte un plateau 4 au bord longitudinal 5 duquel est articulé un couvercle 6 en forme de cuvette sensiblement parallèlépipédique.

En position de service, comme indiqué sur la Figure 1, le couvercle 6 prend appui sur le sol par l'intermédiaire de barres d'appui 7 qui servent en même temps d'organes de préhension du couvercle 6 lors de son ouverture.

La toile de tente 8 (représentée en pointillés) est fixée sur un arceau principal 9 dont les montants 9a sont articulés sur le bord supérieur 1a de la remorque, au-dessus de l'articulation 5 du couvercle 6. La toile 8 est également fixée sur deux arceaux secondaires 10 articulés de part et d'autre de l'arceau principal 9 sur des noix coulissantes 11 montées sur les montants 9a de cet arceau principal 9. La toile 8 est fixée au bord 4a du plateau 4 et au bord 6a du couvercle 6 opposés à l'articulation 5 de ce dernier.

L'armature de la toile 8 comprend de plus, deux paires de tiges 12 articulées aux extrémités libres 9b des montants 9a de l'arceau principal 9, et aux articulations 12a des montants 10a des arceaux secondaires 10. Les arceaux secondaires 10 se trouvent ainsi suspendus à l'arceau principal 9 au moyen des tiges 12.

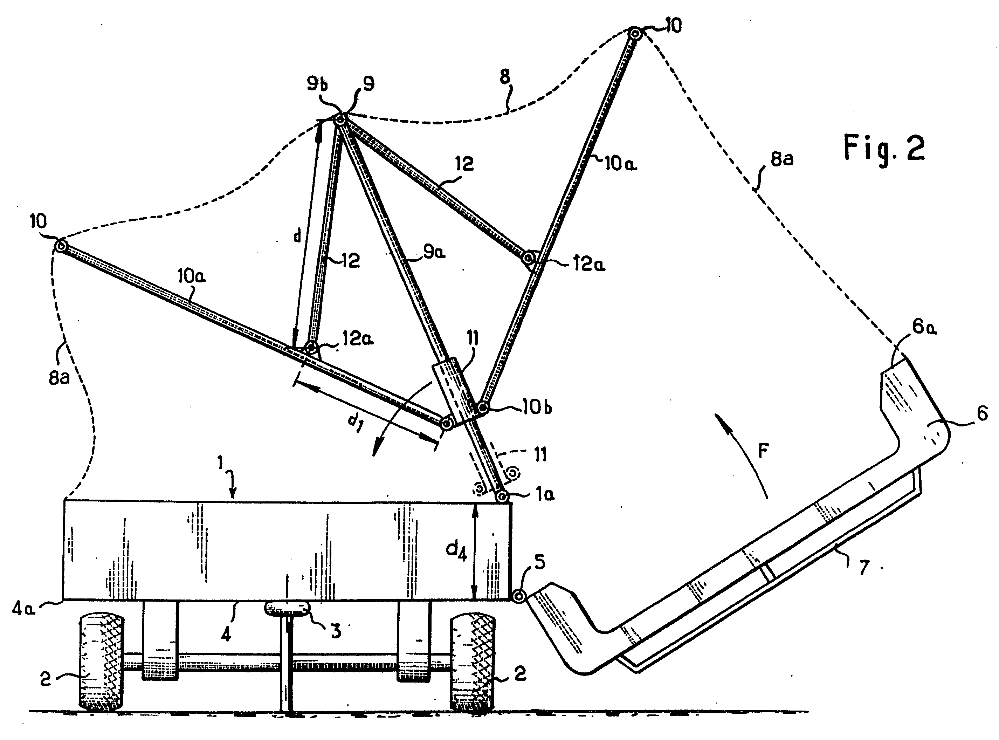

Dans l'exemple représenté la somme de la longueur $d$ d'une tige 12 et de la distance $d_1$ comprise entre l'articulation 10b du montant 10a de l'arceau secondaire à l'arceau principal 9 et l'articulation 12a de cette tige 12 à ce montant de l'arceau secondaire 10 est sensiblement égale à la distance $d_2$ comprise entre l'articulation 9b des tiges à l'arceau principal 9, et l'articulation 10b des montants des arceaux secondaires, lorsque les noix 11 sont situées en fin de course, à proximité du bord 1a de la remorque (voir position en pointillés de la noix 11 sur la Figure 2).

De plus, la longuueur de chaque montant 9a de l'arceau principal 9 est sensiblement égale à la longueur de chaque montant 10a des arceaux secondaires 10, cette longueur étant elle-même légèrement inférieure à la largeur $d_3$ de la remorque 1.

D'autre part, on voit sur la Figure 1 que les pans latéraux 8a de la toile 8, compris entre les arceaux secondaires 10 et les bords respectifs 4a et 6a du plateau 4 et due couvercle 6, sont sensiblement perpendiculaires au sol lorsque la toile 8 est dépliée.

En outre, la somme de la profondeur du couvercle 6, de la distance $d_4$ comprise entre le plateau 4 de la remorque 1 et l'articulation de l'arceau principal 9 au bord supérieur (1a) de la remorque, et de la longueur des montants 9a de cet arceau principal 9 est supérieure à la taille moyenne d'un homme.

Pour replier la toile de tente 8 vers la remorque 1, on procède comme suit (voir Figure 2):

On soulève le couvercle 6 et on le rabat vers la remorque 1 autour de l'articulation 5 (voir flèche F). On relâche ainsi la tension qui s'exerce sur la toile 8 entre ses points de fixation respectifs 4a et 6a au plateau 4 et au couvercle 6.

De ce fait, le poids de la toile 8 qui s'applique sur l'armature, entraîne simultanément le basculement de l'arceau principal 9 vers la remorque 1, le coulissement des noix 11 vers l'articulation 1a de l'arceau principal 9 et le rabattement des arceaux secondaires 10 et des tiges 12 vers l'arceau principal 9.

Lorsque le couvercle 6 est complètement rabattu sur la remorque 1, les arceaux secondaires 10 et les tiges 12 s'étendent à l'intérieur de la remorque parallèlement les uns aux autres et à très faible distance les uns des autres, la toile 8 se trouvant pliée sur elle-même, sous les arceaux 9 et 10, entre ces derniers et au dessus de ceux-ci. L'ensemble occupe un encombrement très réduit qui prend aisément place à l'intérieur de la remorque 1.

Le dépliage de la toile 8 est effectué tout aussi facilement que son repliage.

A cet effet, il suffit de soulever le couvercle 6 et le basculer vers le sol. Dans ce mouvement, les arceaux 9 et 10 sont entraînés vers l'extérieur. Les arceaux secondaires 10 coulissent vers le sommet de l'arceau principal 9 en s'écartant en éventail de ce dernier grâce aux tiges 12, jusqu'à atteindre la position représentée sur la Figure 1.

Sans les tiges 12, on n'obtiendrait qu'un déploiement partiel de la toile 8, car les noix coulissantes 11 ne pourraient coulisser suffisamment haut sur les montants 9a. Par conséquent, il serait nécessaire de pousser les noix 11 vers le haut manuellement, ou au moyen d'un treuil agissant sur des câbles, pour obtenir une tension complète de la toile 8.

Grâce aux tiges 12, les arceaux secondaires 10 sont automatiquement remontés jusqu'à une position presque horizontale. De ce fait, compte tenu de la longueur des montants 10a des arceaux 10, les pans 8a de la toile se trouvent, en fin de dépliage, sensiblement perpendiculaires au sol, de sorte qu'on améliore considérablement l'habitabilité.

De plus, selon l'invention, le simple basculement du couvercle 6 combiné avec l'action des tiges 12 sur les arceaux secondaires 10 entraîne automatiquement le dépliage de la toile 8 et la tension de celle-ci et ce, sans qu'il soit nécessaire de bloquer en position haute les noix coulissantes 11. La mise en place ultérieure de meubles divers sur la couvercle 6 suffit ensuite à éviter tout risque de repliage intempestif de la toile 8 vers la remorque 1 sous l'effet, par exemple, d'une poussée extérieure telle que le vent.

Par ailleurs, grâce aux tiges 12, il est possible de donner aux montants des arceaux 9 et 10 une longueur suffisante, pour qu'un homme de taille moyenne puisse tenir debout dans la caravane sur la quasi-totalité de la surface intérieure de celle-ci, y compris sur le plateau 4 de la remorque 1.

La caravane pliante conforme à l'invention est non seulement très commode à déplier et à replier, mais sa structure se prête à un aménagement très fonctionnel de son intérieur.

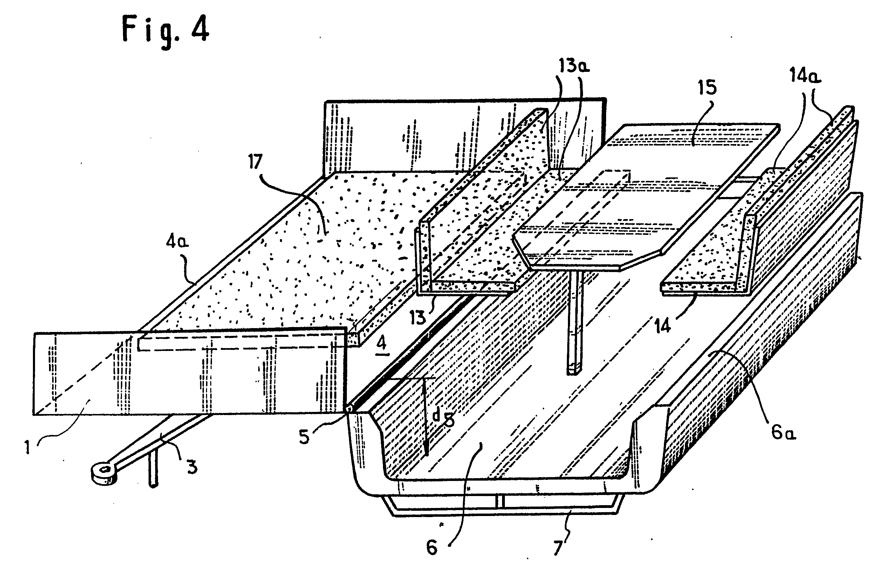

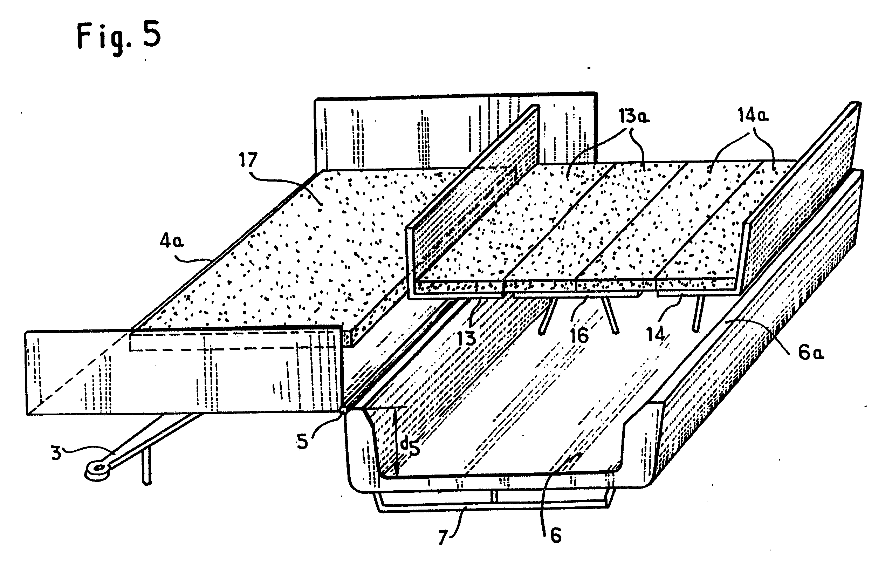

Ainsi, dans l'exemple de la Figure 4, la distance $d_5$ comprise entre le fond du couvercle 6 et le plateau 4 auquel ce couvercle est articulé, correspond à la hauteur d'un siège. Ainsi, la partie du plateau 4 adjacente au couvercle 6 est particulièrement bien adaptée pour recevoir une banquette 13. De ce fait, il est avantageux de placer en regard de cette banquette 13, à proximité du bord opposé 6a du couvercle, une autre banquette 14, une table 15 étant placée entre les deux banquettes 13 et 14. Ces banquettes 13 et 14, réalisées par des plaques de mousses 13a et 14a modulaires, peuvent se transformer facilement en un lit 16 pour la nuit, comme indiqué sur la Figure 5. De jour, comme de nuit, un matelas en mousse 17 peut être disposé longitudinalement sur le plateau 4 de la remorque 1.

Bien entendu, l'invention n'est pas limitée aux exemples que l'on vient de décrire et on peut apporter à ces derniers de nombreuses modifications sans sortir du cadre de l'invention.

Ainsi, l'un des arceaux secondaires 10 pourrait comporter des montants 10a télescopiques contre l'action d'un ressort de compression. Cette disposition peut faciliter le repliage de la toile 8 et compléter la tension de cette dernière afin de rattraper soit les tolérances de fabrication, soit le retrait de la toile sous l'effet de l'humidité, soit encore les inégalités du sol où repose le couvercle 6.

De tels montants télescopiques peuvent être remplacés par des montants flexibles en arc.

Par ailleurs, les montants 10a de l'arceau secondaire 10 qui est situé en position de service, audessus du couvercle 6, pourrait présenter entre son extrémité libre et l'articulation 12a de la tige 12, une courbure de concavité dirigée vers le bas, en vue de ménager entre cette courbure et le couvercle 6 une hauteur suffisante pour la réalisation d'une porte d'accès.

D'autre part, les deux pans de toile 8 compris entre l'extrémité libre de l'arceau principal 9 et les extrémités libres des arceaux secondaires 10, peuvent être renforcés ou remplacés par des panneaux amovibles, rigides, pouvant être logés dans la remorque 1.

En outre, le couvercle 6 peut être remplacé par un simple plateau articulé au niveau du bord du plateau de la remorque, ce qui permet d'obtenir une surface plane.

Enfin, le couvercle 6 ou le plateau précité peut être articulé suivant la largeur de la remorque.

**Revendications**

1. Caravane pliante comprenant une toile de tente (8) et une remorque (1) destinée à contenir cette toile, cette dernière pouvant être déployée sur ladite remorque après ouverture d'un couvercle (6) articulé sur l'un des bords (5) de la remorque, la toile de tente (8) étant fixée sur un arceau principal (9) articulé au bord de la remorque et sur deux arceaux secondaires (10) articulés de façon coulissante sur les montants (9a) de l'arceau principal, des moyens de liaison étant prévus entre ce dernier et les arceaux secondaires, caractérisée en ce que chaque arceau secondaire (10) est relié à l'arceau principal (9) par au moins une tige (12) l'une des extrémités de cette tige étant articulée à un des montants de l'arceau secondaire et l'autre extrémité étant articulée sensiblement à l'extrémité libre (9b) de l'arceau principal (9).

2. Caravane conforme à la revendication 1, caractérisée en ce qu'elle comprend deux paires de tiges (12), une des extrémités de chaque tige de chaque paire étant articulées sensiblement à l'extrémité libre (9b) d'un des montants (9a) de l'arceau principal (9), l'autre extrémité de chaque tige étant articulé au montant correspondant (10a) des arceaux secondaires (10) articulés de façon coulissante sur le même montant de l'arceau principal.

3. Caravane conforme à l'une quelconque des revendications 1 ou 2, caractérisée en ce que la somme de la longueur ($d$) d'une tige (12) et de la distance ($d_1$) comprise entre l'articulation (10b) du montant (10a) de l'arceau secondaire à l'arceau principal (9) et l'articulation (12a) de cette tige (12) à ce montant de l'arceau secondaire (10) est sensiblement égale à la distance ($d_2$) comprise entre l'articulation (9b) des tiges à l'arceau principal (9), et l'articulation (10b) des montants des arceaux secondaires (10) lorsque cette dernière est située en fin de course à proximité du bord (1a) de la remorque.

4. Caravane conforme à l'une quelconque des revendications 1 à 3, l'arceau principal (9) étant articulé sensiblement au bord supérieur (1a) de la remorque, caractérisée en ce que la longueur de chaque montant (9a) de l'arceau principal (9) est sensiblement égale à la longueur de chaque montant (10a) des arceaux secondaires (10), cette longueur étant légèrement inférieure à la largeur ($d_3$) de la remorque (1).

5. Caravane conforme à l'une quelconque des revendications 3 ou 4, caractérisée en ce que les pans latéraux (8a) de la toile (8) compris entre les arceaux secondaires (10) et les bords opposés (4a), (6a) de la remorque (1) et du couvercle (6) sont sensiblement perpendiculaires au sol lorsque la toile (8) est dépliée.

6. Caravane conforme à l'une quelconque des revendications 4 ou 5, caractérisée en ce que la somme de la profondeur du couvercle (6), de la distance ($d_4$) comprise entre le plateau (4) de la remorque et l'articulation de l'arceau principal (9) au bord (1a) de cette remorque et de la longueur du montant (3a) de cet arceau principal (9) est supérieure à la taille moyenne d'un homme.

7. Caravane conforme à l'une quelconque des revendications 1 à 6, le couvercle (6) étant articulé à la remorque (1) sensiblement au niveau du plateau (4) de cette remorque, ce couvercle formant un cuvette sensiblement parallélépipédique, caractérisée en ce que la profondeur ($d_5$) de cette cuvette est sensiblement égale à la hauteur d'un siège.

8. Caravane conforme à l'une quelconque des revendications 1 à 7, caractérisée en ce que l'un au moins des arceaux secondaires (10) comporte des montants (10a) télescopiques contre l'action d'un ressort.

9. Caravane conforme à l'une quelconque des revendications 1 à 8, caractérisée en ce que les deux pans de toile (8) compris entre l'extrémité libre de l'arceau principal (9) et les extrémités libres des arceaux secondaires (10) sont renforcés ou remplacés des par panneaux amovibles, rigides et pouvant être logés dans la remorque.

10. Caravane conforme à l'une quelconque des revendications 1 à 9, caractérisée en ce que le couvercle (6) est constitué par un plateau articulé au niveau du plateau de la remorque.

## Claims

1. A folding caravan comprising a trailer (1) containing a tent canvas (8) which can be unfolded from said trailer after opening a cover (6) which is hinged on one of the edges (5) of the trailer, the tent canvas (8) being fixed to a main tent-pole (9) pivotally mounted on the edge of the trailer and to two secondary tent-poles (10) slidably and pivotally mounted on the upright members (9a) of the main tent-pole, connexion means being provided between the latter and the secondary tent-poles, characterized in that each secondary tent-pole (10) is connected to the main tent-pole (9) by means of at least one rod (12), one of the ends of said rod being pivotally attached to one end of the upright members of the secondary tent-pole and the other end being pivotally attached substantially to the free end (9b) of the main tent-pole (9).

2. A caravan according to claim 1, characterized in that said caravan comprises two pairs of rods (12), one of the ends of each rod of each pair being pivotally attached substantially to the free end (9b) of one of the upright members (9a) of the main tent-pole (9), the other end of each rod being pivotally attached to the corresponding upright member (10a) of the secondary tent-poles (10) slidably and pivotally attached to the same upright member of the main tent-pole.

3. A caravan according to any of claims 1 or 2, characterized in that the sum of the length ($d$) of a rod (12) and of the distance ($d_1$) between the articulation (10b) of the upright member (10a) of the secondary tent-pole to the main tent-pole (9) and the articulation (12a) of this rod (12) to this upright member of the secondary tent-pole (10), is substantially equal to the distance ($d_2$) between the articulation (9b) of the rods to the main tent-pole (9) and the articulation (10b) of the upright members of the secondary tent-poles (10) when said articulation is located at the end of travel in the proximity of the edge of the trailer.

4. A caravan according to any of claims 1 to 3, in which the main tent-pole (9) is hinged substantially on the top edge (1a) of the trailer, characterized in that the length of each upright member (9a) of the main tent-pole (9) is substantially equal to the length of each upright member (10a) of the secondary tent-poles (10), said length being slightly shorter than the width ($d_3$) of the trailer (1).

5. A caravan according to any of claims 3 or 4, characterized in that the side panels (8a) of tent canvas (8) located between the secondary tent-poles (10) and the opposite edges (4a), (6a) of the trailer (1) and of the trailer cover (6) are substantially perpendicular to the ground when the canvas (8) is in the completely unfolded state.

6. A caravan according to any of claims 4 or 5, characterized in that the sum of the depth of the trailer cover (6), of the distance ($d_4$) between the trailer deck (4) and the articulation of the main tent-pole (9) to the edge (1a) of said trailer and of the length of the upright member (9a) of the said main tent-pole exceeds the average height of a man.

7. A caravan according to any of claims 1 to 6, in which the trailer cover (6) is hinged on the trailer (1) substantially at the level of the trailer deck (4), said trailer cover (6) being intended to form a substantially parallelepipedal tray, characterized in that the depth ($d_5$) of said tray is substantially equal to the height of a seat.

8. A caravan according to any of claims 1 to 7, characterized in that at least one of the secondary tent-poles (10) is provided with telescopic upright members (10a) which act in opposition to a spring.

9. A caravan according to any of claims 1 to 8, characterized in that the two canvas faces (8) located between the free end of the main tentpole (9) and the free ends of the secondary poles (10) are reinforced or replaced by removable and rigid panels which can be housed within the trailer.

10. A caravan according to any of claims 1 to 9, characterized in that the trailer cover (6) is constituted by a platform which is hinged at the level of the trailer deck.

## Patentansprüche

1. Zusammenklappbarer Wohnwagen, bestehend aus einem Anhänger (1) mit einem Stoffzelt (8), das nach Offnung eines an eine Anhängerkante (5) angelenkten Deckels (6) auf dem Anhänger aufgespannt werden kann, wobei das Stoffzelt (8) auf einem an der Anhängerkante angelenkten Hauptgestänge (9) und zwei Hilfsgestañgen (10) befestigt wird, die mit den Streben (9a) des Hauptgestänges schwenk- und verschiebbar verbunden sind, wobei Verbindungsmitteln zwischen dem Hauptgestänge und den Hilfsgestängen vorhanden sind, dadurch gekennzeichnet, dass jedes Hilfsgestänge (10) mit dem Hauptgestänge (9) durch wenigstens eine Stange (12) in Verbindung steht, deren eines Ende an einer Strebe des Hilfsgestänges und das andere Ende annähernd an das freie Ende (9b) des Hauptgestänges (9) gelenkig angeschlossen sind.

2. Wohnwagen nach Anspruch 1, gekennzeichnet durch zwei Stangenpaare (12), wobei eines Ende jeder Stange jedes Paars nahezu an das freie Ende (9b) einer Strebe (9a) des Hauptgestänges (9) und das andere Ende jeder Stange an die entsprechende Strebe (10a) schwenk- und verschiebbar mit derselben Strebe des Hauptgestänges verbunden Hilfsgestänge (10) angelenkt sind.

3. Wohnwagen nach einem der Ansprüche 1 oder 2, dadurch gekennzeichnet, dass die Summe der Länge (d) einer Stange (12) und des Abstandes ($d_1$) zwischen der Gelenkverbindung (10b) der Strebe (10a) des Hilfsgestänges mit dem Hauptgestänge (9) und der Gelenkverbindung (12a) dieser Stange (12) mit diesem Hilfsgestänge (10) annähernd gleich dem Abstand ($d_2$) zwischen der Gelenkverbindung (9b) der Stangen mit dem Hauptgestänge (9) und der Gelenkverbindung (10b) der Hilfsgestängestreben (10) ist, wenn sich letztere am Ende des Weges nahe dem Anhängerrand befindet.

4. Wohnwagen nach einem der Ansprüche 1 bis 3, bei dem das Hauptgestänge (9) etwa am oberen Rand (1a) des Anhängers angelenkt ist, dadurch gekennzeichnet, dass die Länge jeder Strebe (9a) des Hauptgestänges (9) etwa gleich der Länge jeder Strebe (10a) der Hilfsgestänge (10) und dass diese Länge etwas kleiner als die Breite ($d_3$) des Anhängers (1) ist.

5. Wohnwagen nach einem der Ansprüche 3 oder 4, dadurch gekennzeichnet, dass die seitlichen Bahnen (8a) des Zeltstoffes (8) zwischen den Hilfsgestängen (10) und den gegenüberliegenden Rändern (4a, 6a) des Anhängers (1) und des Deckels (6) in aufgespanntem Zustand etwa senkrecht zum Boden verlaufen.

6. Wohnwagen nach einem der Ansprüche 4 oder 5, dadurch gekennzeichnet, dass die Summe der Tiefe des Deckels (6), des Abstandes ($d_4$) zwischen dem Anhängerboden (4) und der Gelenkverbindung des Hauptgestänges (9) mit dem Rand (1a) des Anhängers und der Länge der Strebe (9a) des Hauptgestänges (9) grösser als die mittlere Figur eines Menschen ist.

7. Wohnwagen nach einem der Ansprüche 1 bis 6, bei dem der an den Anhänger (1) etwa auf der Höhe des Anhängerboden (4) angelenkte Deckel (6) eine etwa parallelepipedische Wanne bildet, dadurch gekennzeichnet, dass die Tiefe ($d_5$) der Wanne etwa der Höhe eines Sitzes entspricht.

8. Wohnwagen nach einen der Ansprüche 1 bis 7, dadurch gekennzeichnet, dass wenigstens eines der Hilfsgestänge (10) unter Federwirkung stehende Teleskopstreben (10a) aufweist.

9. Wohnwagen nach einem der Ansprüche 1 bis 8, dadurch gekennzeichnet dass die beiden zwischen dem freien Ende des Hauptgestänges (9) und den freien Enden der Hilfsgestänge (10) befindlichen Stoffbahnen (8) verstärkt oder durch abnehmbare starre Füllungen ersetzt sind, die auf dem Anhänger untergebracht werden können.

10. Wohnwagen nach einem der Ansprüche 1 bis 9, dadurch gekennzeichnet, dass der Deckel (6) aus einer Tafel besteht, die im Bereich des Anhängerbodens angelenkt ist.

Fig. 1

0 005 382

Fig. 2

0005 382

# Fig. 3

Fig. 4

# Fig. 5

0 005 382